# FASCICULE DE BREVET EUROPEEN

(11) **EP 0 972 143 B1**
(45) Date de publication et mention de la délivrance du brevet: **09.04.2003**
(21) Numéro de dépôt: 99902610.7
(22) Date de dépôt: 05.02.1999
(51) Int. Cl.: F16D 13/75

(54) **MECANISME D'EMBRAYAGE MUNI D'UN MODULE POUR RATTRAPAGE D'USURE**
KUPPLUNGSMECHANISMUS MIT EINER NACHSTELLVORRICHTUNGSEINHEIT
CLUTCH MECHANISM EQUIPPED WITH A WEAR TAKE-UP MODULE

(30) Priorité: 05.02.1998 FR 9801453; 14.12.1998 FR 9815772
(43) Date de publication de la demande: 19.01.2000
(73) Titulaire: VALEO EMBRAYAGES s.a.s., 80009 Amiens Cedex 1 (FR)
(72) Inventeur: BLARD, Michel, F-92130 Issy-les-Moulineaux (FR); GRATON, Michel, F-75020 Paris (FR)
(74) Mandataire: Gamonal, Didier
(86) Numéro de dépôt international: FR9900262
(87) Numéro de publication internationale: WO99040336

(56) Documents cités:
- FR-A- 2 753 503
- FR-A- 2 764 021
- US-A- 5 090 536
- US-A- 5 806 985

## Description

La présente invention concerne un mécanisme d'embrayage à friction, notamment pour véhicule automobile, et se rapporte plus particulièrement à un embrayage équipé d'un dispositif de compensation de l'usure due notamment à l'usure de ou des garnitures de friction, ce dispositif, ci-après appelé dispositif de rattrapage d'usure, opérant au fur et à mesure de l'usure de ou des garnitures.

Un embrayage à friction classique comporte généralement un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne, et supportant par sa périphérie externe un couvercle arrière auquel est attaché, avec mobilité axiale, au moins un plateau avant de pression.

Le plateau de pression est solidaire en rotation du couvercle et du plateau de réaction tout en pouvant se déplacer axialement sous la sollicitation de moyens embrayeurs à action axiale commandés par des moyens débrayeurs. Les moyens débrayeurs peuvent consister en des ressorts hélicoïdaux, ou en deux rondelles Belleville montées en série, soumis à l'action de leviers de débrayage formant les moyens débrayeurs.

Généralement, les moyens embrayeurs et débrayeurs appartiennent à une même pièce, par exemple un diaphragme métallique prenant appui sur le couvercle. Le diaphragme peut être monté en série ou en parallèle avec une rondelle Belleville pour assurer une assistance de l'effort de débrayage.

Un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement pour transmettre le couple de l'arbre menant à l'arbre mené.

Classiquement les garnitures de friction sont montées sur un support axialement élastique accouplé de manière rigide ou élastique à un moyeu calé en rotation sur l'arbre mené. Grâce à cette disposition le disque de friction assiste le diaphragme lors de l'opération de débrayage de l'embrayage. En variante, le support est noyé à sa périphérie externe dans une garniture de friction.

Classiquement les moyens embrayeurs, le couvercle et le plateau de pression appartiennent à un ensemble unitaire dit mécanisme d'embrayage à friction.

Les moyens embrayeurs commandent le déplacement axial du plateau de pression lorsqu'ils sont actionnés par une butée de débrayage par l'intermédiaire des moyens débrayeurs.

La butée de débrayage peut être commandée mécaniquement, hydrauliquement, électriquement ou électromécaniquement. La commande peut être du type manuel, automatique ou semi-automatique.

Au cours de la durée de vie d'un tel embrayage, la ou les garnitures de friction ainsi que les contre-matériaux, plateaux de pression et de réaction, s'usent, ce qui provoque une variation de la position axiale du plateau de pression, de celle des moyens embrayeurs à action axiale et de la butée de débrayage, d'où il s'ensuit une variation de la force de serrage axial entre le disque de friction, d'une part, et les plateaux de pression et de réaction, d'autre part, en raison des modifications des conditions de travail des moyens embrayeurs, et la force nécessaire pour débrayer s'en trouve affectée. En dotant un tel embrayage d'un dispositif de rattrapage d'usure, on évite ces inconvénients, les moyens embrayeurs, ainsi que la butée de débrayage, usuellement en appui constant sur les moyens débrayeurs, occupant la même position lorsque l'embrayage est en position d'engagement, ce qui permet de réduire l'encombrement axial de l'embrayage à friction.

On a déjà proposé, selon le document US-A-5 090 536, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression ; pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Un tel dispositif, selon le document US-A-5 090 536, présente les inconvénients suivants : la pièce d'armement, qui est portée par le couvercle de l'embrayage, est susceptible d'être entraînée en rotation par un levier lui-même commandé par la butée de débrayage ; dès lors, la butée de débrayage doit être spécifiquement adaptée à la commande dudit levier et est encombrante axialement ; par ailleurs, lorsque la butée de débrayage est amenée à être déplacée axialement au delà de la course juste nécessaire pour l'opération de débrayage, l'opération de rattrapage est effectuée alors qu'il n'y a pas eu usure, ce qui est dangereux car pouvant conduire à un blocage de l'embrayage qui finit par ne plus pouvoir être débrayé.

La demande de brevet français FR 2 753 503 (ou EP 0898662) qui ne fait pas partie de l'état de la technique, décrit et représente aux figures 21 à 26 un mécanisme d'embrayage à friction, notamment pour véhicule automobile, du type comportant un couvercle arrière 52, un plateau de pression avant 51 lié en rotation au couvercle 52 tout en pouvant se déplacer axialement par rapport à celui-ci, des moyens d'appui 14 portés par le plateau de pression 51, des moyens embrayeurs 53 à action axiale agissant encre le couvercle 52 et les moyens d'appui 14, et un dispositif de rattrapage d'usure.

Le dispositif de rattrapage d'usure comprend d'une part des moyens 54 à rampes 56 portant une denture externe 59 et placés entre le plateau de pression 51 et les moyens d'appui 14 pour constituer un plateau de pression 51, 54 d'épaisseur variable entre sa face de friction et les moyens d'appui 14 et comprend, d'autre part, une cassette portée par le couvercle 52 et qui comporte une pièce 62, solidaire du couvercle 52, formant support pour la fixation de la cassette sur le couvercle 52.

Le support 62 est globalement en forme de U avec une âme centrale 64 supérieure, en forme générale de plaque horizontale, d'orientation globalement tangentielle et deux ailes latérales 65, 66 opposées dont chacune s'étend verticalement vers le bas dans un plan d'orientation axiale perpendiculaire à l'âme supérieure et dont chacune comporte un trou 61 pour le montage à rotation, avec interposition de paliers 3, d'un équipage 67, 63, 60, la pièce 62 formant support comportant une patte avant de fixation 68 qui s'étend verticalement vers le haut dans un plan transversal perpendiculaire à l'axe général du mécanisme depuis un bord transversal avant de la plaque formant âme centrale 64 et qui est fixée par rivetage à un bord périphérique du couvercle 52.

L'équipage comporte notamment un axe portant une vis sans fin, une roue à rochet et un ressort hélicoïdal. Le support porte en outre un organe élastique doté, d'une part, d'une languette de commande et, d'autre part, d'un cliquet anti-retour.

La languette de commande est propre à être mandeuvrée par un actionneur appartenant aux moyens embrayeurs de l'embrayage et coopère, ainsi que le cliquet, avec les dents de la roue à rochet.

La vis sans fin coopère avec les dents d'une denture appartenant aux moyens à rampes réalisés sous la forme d'un anneau à rampes disposé axialement entre les moyens d'appui des moyens embrayeurs et le plateau de pression. La vis sans fin coopère avec la denture et avec des moyens d'entraînement en rotation, comprenant le ressort hélicoïdal, qui sont rendus opérationnels par l'usure des garnitures de friction lorsque l'embrayage est engagé. La vis sans fin est montée tangentiellement par rapport à sa denture associée.

Il est souhaitable de faciliter l'assemblage des composants de la cassette et notamment de permettre l'inclinaison ou non de l'axe par décalage des trous des ailes qui reçoivent les extrémités opposées de l'axe.

Dans ce but, l'invention propose un mécanisme d'embrayage du type de celui mentionné précédemment, dans lequel l'une au moins des ailes latérales du support porte un palier troué centralement qui reçoit une extrémité de l'axe et qui est logé dans un trou borgne de l'aile dans lequel il est enfilé puis emprisonné, notamment, par sertissage. Grâce à l'invention , on peut former un ensemble vis sans fin - roue à rochet - axe que l'on monte aisément dans le support.
Selon d'autres caractéristiques de l'invention :
- chacune des deux ailes latérales porte un palier ;
- les trous sont décalés axialement l'un par rapport à l'autre pour inclinaison de la vis sans fin et de l'axe ;
- les trous centraux des paliers sont inclinés pour inclinaison de la vis sans fin et de l'axe ;
- le support porte un organe élastique doté d'une languette de commande portée par un retour que présente ledit organe élastique et d'un cliquet anti-retour ; le cliquet anti-retour et la languette de commande coopérant avec une roue à rochet solidaire de la vis sans fin, et le retour de l'organe élastique présentant deux tronçons de hauteur différente disposés de part et d'autre de la languette de commande ;
- les paliers sont engagés dans des trous borgnes réalisés dans les ailes et verrouillés par sertissage dans lesdits trous.

Dans ce qui précède le verrouillage par sertissage, conduisant à un fluage de matière, est un moyen pour obturer partiellement l'extrémité ouverte du trou borgne et éviter que le palier ne ressorte. Cet obturage partiel peut être réalisé par soudage ou collage.

Bien entendu, on peut utiliser d'autres moyens de verrouillage par exemple en rapportant une pièce supplémentaire sur le support au niveau de l'extrémité ouverte du trou borgne.

Cette pièce, après sa fixation sur le support, coopère avec le palier pour immobiliser celui-ci par exemple par coopération de forme.

La pièce supplémentaire est par exemple fixée par collage , soudage, emmanchement à force ou sertissage sur les ailes.

Bien entendu, toutes les combinaisons sont possibles. Ainsi, un des paliers peut être emprisonné et verrouillé par au moins une pièce supplémentaire ou par soudage ou collage. Une seule des ailes peut être dotée d'un trou borgne.

Il faut alors, par exemple, introduire en biais l'axe avec le palier concerné dans le trou fermé, puis faire pivoter l'ensemble pour introduire l'autre palier dans le trou borgne et enfin emprisonner l'ensemble.

En variante, l'un au moins des trous borgnes peut déboucher dans un autre bord de l'aile.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un embrayage équipé d'un dispositif de rattrapage d'usure à cassette selon un exemple de réalisation de l'invention, avec des arrachements partiels pour illustrer notamment la denture de l'anneau à rampes et les languettes tangentielles ;
- la figure 2 est une vue en section selon la ligne 2-2 de la figure 1 ;
- la figure 3 est une vue en perspective éclatée des principaux composants de la cassette du dispositif de rattrapage d'usure selon l'invention ;
- la figure 4 est une vue à plus grande échelle, selon la flèche F4 de la figure 2, qui représente la cassette en position assemblée de ses composants ;
- la figure 5 est une vue selon la flèche F5 de la figure 4 sur laquelle les paliers et les parties correspondantes des ailes du support sont illustrés en section axiale ;
- la figure 6 est une vue latérale selon la flèche F6 de la figure 4;
- la figure 7 est une vue en section axiale de l'équipage porté par le support de la cassette, selon un premier exemple de réalisation monobloc ; et
- la figure 8 est une vue similaire à celle de la figure 8 qui représente un autre exemple de réalisation de l'équipage avec la roue à rochet et la vis sans fin en une seule pièce rapportée sur un axe.

Dans la description qui va suivre, des éléments et composants identiques, similaires ou analogues seront désignés par les mêmes chiffres de référence.

Pour simplifier la compréhension de la description et les revendications, on utilisera à titre non limitatif les termes horizontal, vertical, supérieur, inférieur, etc., notamment en référence aux figures.

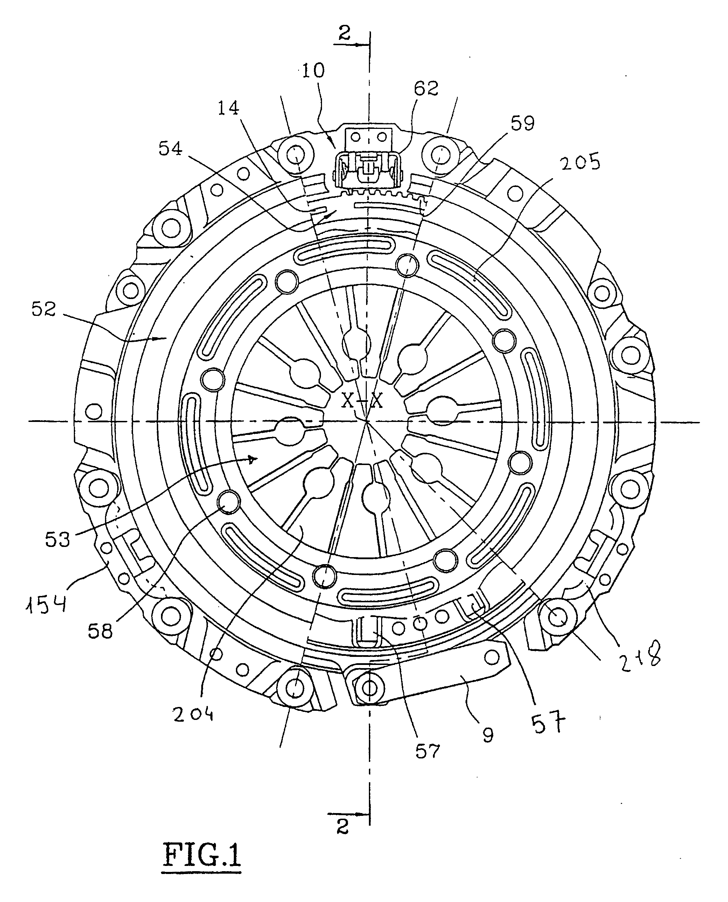

On décrira maintenant un premier mode de réalisation illustré aux figures 1 à 7.

Ces figures représentent un embrayage équipé d'un dispositif de rattrapage d'usure, du genre de celui décrit dans la demande de brevet français FR 2 753 503 (ou EP 0 898 662)
à laquelle il conviendra de se reporter pour plus de détails.

En se reportant aux figures, on voit un mécanisme d'embrayage à friction, notamment pour véhicule automobile, d'axe de symétrie axiale X-X, qui forme un ensemble unitaire et qui comprend un plateau de pression avant 51 destiné à coopérer avec un disque de friction (représenté de manière schématique en 100 dans le bas de la figure 1), portant à sa périphérie externe des garnitures de friction, et qui coopère lui-même avec un plateau de réaction (représenté de manière schématique en 101 dans le bas de la figure 1). Le plateau de réaction est destiné à être calé en rotation sur un arbre menant, tel que le vilebrequin du moteur à combustion interne. Le disque de friction 100 est solidaire en rotation d'un arbre mené tel que l'arbre d'entrée de la boîte de vitesses.

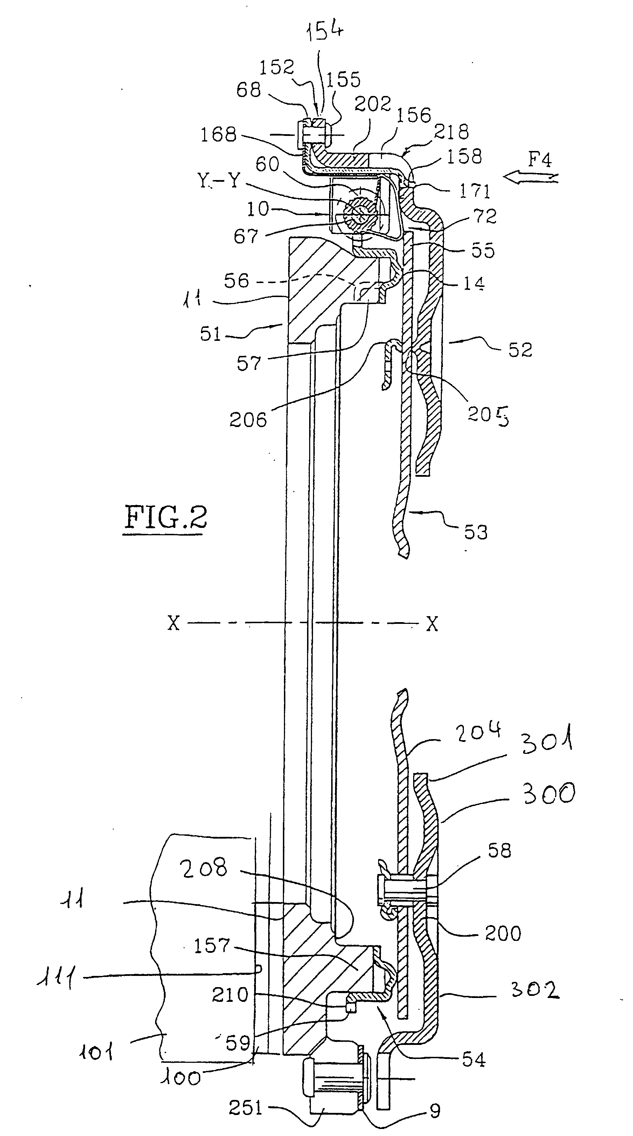

Le plateau de pression 51 est solidaire en rotation du couvercle 52 par l'intermédiaire de languettes tangentielles 9 dont une est visible sur les figures 1 et 2 et qui, élastiques axialement, constituent en même temps des moyens de rappel axial du plateau de pression 51 vers l'arrière en direction du fond transversal 200 du couvercle 52. En variante, les languettes sont d'orientation radiale.

Les languettes 9 sont fixées par rivetage à l'une de leur extrémité au couvercle 52 et à leur autre extrémité à une patte 251 du plateau de pression (figure 2).

Les languettes 9 autorisent un mouvement axial du plateau de pression 51 par rapport au couvercle 52. Le couvercle est métallique en étant en tôle emboutie tandis que les plateaux de pression et de réaction sont en fonte. Ce couvercle 52 comporte le fond, d'orientation transversale 200, troué centralement et des moyens 152 pour sa fixation à un plateau de réaction, éventuellement divisé pour formation d'un volant amortisseur.

Ici le couvercle 52 est globalement en forme d'assiette creuse et comporte à sa périphérie externe un rebord 152, d'orientation globalement transversale qui s'étend radialement vers l'extérieur dans un plan vertical perpendiculaire à l'axe X-X, formant notamment les moyens de fixation du couvercle 52 au plateau de réaction 101, ce rebord 152 étant doté de trous pour passage d'organes de fixation, tels que des vis, du couvercle au plateau dé réaction.

Une jupe annulaire d'orientation axiale relie le fond 200 au rebord 152 et est ouverte au niveau des languettes 9.

Le plateau de réaction 101 peut être plat ou, en variante ce plateau présente une jupe sur laquelle se fixe le rebord 152 en sorte que le couvercle 52 peut être moins profond.

Le plateau de pression 51, tout en étant solidaire en rotation du couvercle 52, est donc déplaçable axialement par rapport au couvercle 52 sous la sollicitation de moyens embrayeurs à action axiale commandés par des moyens débrayeurs, ici un diaphragme 53 monté articulé sur le couvercle 52 grâce à des colonnettes 58 portées par le fond 200 du couvercle 52 troué centralement.

Le diaphragme 53, formant moyen élastique à action axiale, a une forme tronconique à l'état libre et comporte une partie périphérique en forme de rondelle Belleville prolongée vers le centre par une partie centrale fragmentée en doigts radiaux 204 par des fentes comme visible à la figure 1.

Le diaphragme 53 prend appui, par l'intermédiaire de sa rondelle Belleville, sur le fond 200 du couvercle pour action sur le plateau de pression 51 et serrage axial des garnitures de friction, que présente le disque de friction 100, entre les plateaux de pression et de réaction.

Ici l'embrayage est du type poussé, c'est-à-dire qu'il faut, à l'aide d'une butée de débrayage (non représentée), commandée manuellement ou de manière semi-automatique ou automatique et non représentée, agir en poussant sur l'extrémité interne des doigts du diaphragme 53 pour désengager (débrayer) l'embrayage. Pour ce faire (figure 2), le fond du couvercle 52 porte, d'une part, un appui primaire 205 consistant par exemple en un jonc, ou ici en un embouti réalisé dans le fond du couvercle à la périphérie interne de celui-ci et, d'autre part, en regard de l'appui primaire, un appui secondaire 206 sous forme de couronne roulée portée par les colonnettes 58, ou tout autre moyen, par exemple sous forme d'une rondelle tronconique portée par des pattes issues par découpe et pliage du fond du couvercle et traversant des orifices élargis du diaphragme comme les colonnettes 58.

Le diaphragme 53, par la périphérie interne de sa rondelle Belleville, est monté de manière basculante ou pivotante entre lesdits appuis primaire 205 et secondaire 206. Par la périphérie externe de sa rondelle Belleville, il est en contact avec des zones d'appui 14, décrites ci-après. Ces zones 14, formant moyens d'appui, sont portées par le plateau de pression 51.

Pour maintenir, lorsque l'embrayage est embrayé, les moyens embrayeurs à action axiale 53 dans une position axiale indépendante de l'usure des garnitures du disque de friction, et dans une moindre mesure l'usure des plateaux de pression 51 et de réaction 101 dont les faces respectivement 11, 111, dites de friction formant piste de frottement, s'usent au contact des garnitures du disque, il est prévu un dispositif de rattrapage d'usure à rampes.

Le dispositif de rattrapage d'usure comprend une cassette 10 et des moyens à rampes 54 disposés circonférentiellement.

Plus précisément, ces moyens à rampes 54 sont constitués d'un anneau en tôle découpée et emboutie de façon à présenter des rampes 56 disposées circonférentiellement. L'anneau présente également des zones d'appui 14 constituées par l'arête supérieure arrondie d'emboutis en arcs de cercle centrés sur l'axe de l'embrayage et placés radialement à l'extérieur par rapport aux rampes 56.

Le plateau de pression 51 présente ici, venus de moulage, sur sa face transversale arrière 208 tournée vers le fond 200 du couvercle 52, radialement au-delà des colonnettes 58, des plots 57 répartis circonférentiellement à une distance l'un de l'autre qui correspond à celle qui sépare circonférentiellement deux rampes 56 successives, les plots 57 étant destinés à coopérer chacun avec une rampe 56.

L'anneau 54 à rampes 56 est placé axialement entre le diaphragme 53 et le plateau de pression 51 en sorte que les plots 57 reçoivent les rampes 56 et que le diaphragme 53 coopère avec les zones d'appui 14 qui constituent ainsi les moyens d'appui, ici fractionnés mais qui en variante peuvent être continus, par l'intermédiaire desquels le diaphragme 53 agit sur le plateau de pression 51. Cette disposition est économique et simple, les moyens à rampes 54 étant métalliques et obtenus par emboutissage. En variante les plots 57 sont remplacés par des contre-rampes de même forme que les rampes 54.

L'une au moins des zones d'appui 14 des moyens à rampes 54 est prolongée à sa périphérie externe par un rebord 210 parallèle à l'axe de l'embrayage se terminant selon un retour transversal, c'est-à-dire s'étendant dans un plan perpendiculaire à l'axe X-X de l'embrayage, muni à sa périphérie externe d'une denture 59, en sorte que les zones d'appui 14 peuvent être continues et que le rebord est centré par une surépaisseur 157 du plateau de pression 51, la denture étant ici d'un seul tenant avec des moyens à rampes 56.

C'est dans chaque surépaisseur 157 que sont formés les plots 57. Toutes les surépaisseurs 157 peuvent participer au centrage de l'anneau 54 présentant un rebord continu.

Le dispositif de rattrapage d'usure comprend par ailleurs une roue à rochet 60 à dents inclinées solidaire d'un axe 67 qui porte également une vis sans fin 63. Le filet et le pas de la vis sans fin 63 sont adaptés à la denture 59. La vis sans fin 63 est amenée à coopérer avec la denture 59 dans les conditions qui seront décrites ci-après. La vis 63 s'étend tangentiellement par rapport à la denture.

L'axe 67 de la roue à rochet 60 est porté à rotation par un support 62, mieux visible aux figures 2 à 4, en tôle découpée et pliée, en forme générale de U ayant une âme supérieure horizontale 64 en forme de plaque d'orientation tangentielle, et ayant deux ailes latérales opposées 65,65' destinées à supporter l'axe 67. A cet effet, chacune des ailes porte un trou circulaire 61, 61' adapté à le recevoir avec interposition d'un palier 3, 3'.

Chaque aile latérale s'étend verticalement vers le bas dans un plan vertical parallèle à l'axe X-X à partir d'un bord latéral d'orientation axiale 214 de la plaque 64.

La plaque supérieure 64 comporte une patte avant de fixation 68, à l'équerre et dirigée radialement vers l'extérieur, qui est destinée à être fixée sur une plage 154 du rebord externe 152 du couvercle 52 par deux rivets 155.

Plus précisément, la patte avant 68 de fixation par rivetage est une patte centrale unique qui s'étend verticalement vers le haut à partir du bord transversal avant 211 de la plaque 64 dans un plan transversal.

Il est prévu des moyens complémentaires de stabilisation du support 62 de la cassette 10 qui sont constitués par une patte de stabilisation 171. Cette disposition permet de diminuer le nombre de pattes de fixation, d'allonger l'âme 64, de stabiliser le support 62, le tout sans augmenter l'encombrement.

A cet effet, le couvercle 52 présente une ouverture 156 pour le passage de la patte de stabilisation 171 qui prolonge l'âme 64 axialement vers l'arrière.

Plus précisément, la cassette est aménagée dans un logement 218 en surépaisseur du couvercle 52 qui est délimité par la plage 154 solidaire d'une âme d'orientation horizontale 202 dont l'extrémité opposée à la plage 154 est dotée de l'ouverture 156.

L'ouverture 156 est délimitée par un bord horizontal inférieur 158 qui constitue un bord d'appui pour la portion en vis-à-vis de la face inférieure du tronçon d'extrémité libre de la patte de stabilisation 171.

La patte de stabilisation 171 est coudée deux fois en S de manière que le plan horizontal dans lequel s'étend son tronçon d'extrémité libre soit décalé vers le bas, radialement vers l'intérieur, par rapport au plan de l'âme 64. La patte est dans une variante fixée sur le bord inférieur 158 par exemple pour soudage, collage ou sertissage.

L'âme 64 du support 62 présente, à partir de son bord transversal arrière 212 côté opposé au bord transversal avant 211 à partir duquel s'étend la patte de fixation 68, deux retours 71 s'étendant globalement perpendiculairement à l'âme 64, radialement vers l'intérieur en direction de l'axe X-X, et destinés à constituer des butées de contrôle dont le rôle apparaîtra ci-dessous. Les extrémités des retours 71 sont à une distance transversale suffisante l'une de l'autre pour permettre, sans le gêner, le débattement de l'actionneur 55 lors des opérations d'embrayage et de débrayage. Ici trois logements 218 sont prévus (figure 1) et seul un des logements sert à la réception de la cassette 10.

L'actionneur 55 est constitué par une protubérance (ou appendice) que comporte le diaphragme 53 radialement en saillie à sa périphérie externe.

En pratique les retours 71 sont issus par découpe et pliage de l'âme 64 et sont disposés ainsi transversalement de part et d'autre de la patte axiale 171.

Le support 62 est ainsi de forme simple et est stable.

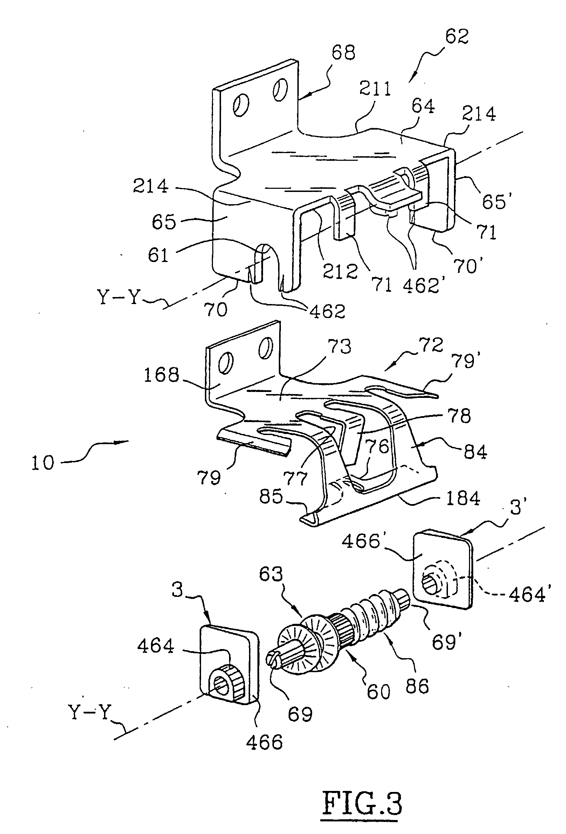

Le support 62 est adapté à recevoir un organe élastique 72, mieux visible aux figures 3 à 6, qui est en forme d'équerre et qui comprend un corps plan allongé en forme de plaque supérieure horizontale 73.

Sur son bord transversal arrière, le corps 73 se prolonge selon une extension en oblique 84.

L'extrémité libre de l'extension élastique 84 est munie d'un retour 85 en forme de barre transversale qui se prolonge selon une languette de commande 76 s'étendant en direction du corps 73 en étant globalement parallèle à celui-ci.

Une découpe 77 est ménagée dans l'extension 84 et, à la faveur de cette découpe 77 et d'échancrures dans le corps 73, est réalisé un cliquet anti-retour 78 en forme de lame. L'extrémité libre du cliquet 78 s'étend globalement perpendiculairement au corps 73 c'est-à-dire radialement vers l'intérieur.

Comme mieux visible à la figure 3, la languette de commande 76 et le cliquet 78 sont légèrement inclinés respectivement par rapport au plan du corps 73 et au plan perpendiculaire au plan du corps 73.

Le cliquet 78 est décalé par rapport à la languette 76, les extrémités libres du cliquet 78 et de la languette 76 étant décalées circonférentiellement.

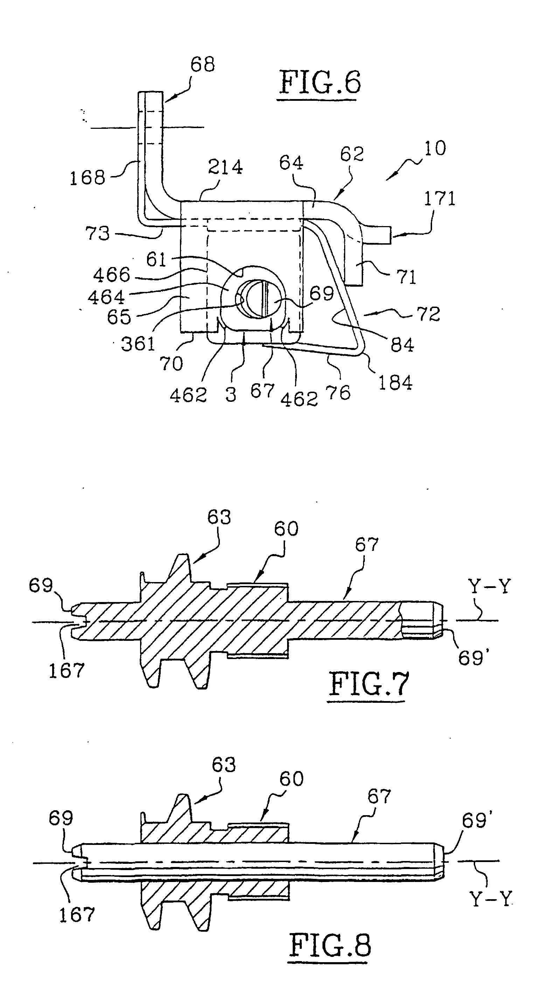

Un ressort hélicoïdal 86 de compression est placé entre la roue à rochet 60 et l'extrémité libre du bras 74, en étant enroulé autour de l'axe 67. Comme on peut le voir aux figures 7 et 8, la vis sans fin 63 et la roue à rochet 60 sont taillées dans une même pièce qui peut être monobloc avec l'axe 67 (figure 7) ou rapportée sur l'axe 67 (figure 8).

La roue à rochet 60 est implantée, selon l'axe Y-Y de l'axe 67, entre la vis 63 et le ressort 86 qui constitue le moyen élastique de rattrapage. La roue à rochet 60 est au droit du cliquet anti-retour 78 qui, par coopération avec les dents inclinées de la roue à rochet 60, empêche la roue à rochet 60 de tourner, ainsi que la vis sans fin 63, dans le sens contraire à celui des aiguilles d'une montre, par rapport à la figure 2.

Le support 62, portant la roue à rochet 60, la vis sans fin 63 et le ressort hélicoïdal 86, étant solidaire du couvercle 52, le diaphragme 53 se déplace par rapport à lui lors des opérations de débrayage et de réembrayage.

Le diaphragme 53 porte à sa périphérie l'appendice radial (ou protubérance radiale), dit actionneur 55, s'étendant radialement à l'extérieur de la partie rondelle Belleville du diaphragme 53 pour coopérer avec l'extension 84 de l'organe élastique 72, plus précisément avec une zone arrondie 184 raccordant la partie principale de l'extension 84 à la lame 76.

On comprendra que, grâce à cette disposition, lors du basculement du diaphragme 53 lors des opérations de débrayage et de réembrayage, l'actionneur 55 déplace l'extension 84 de la droite vers la gauche, par rapport à la figure 1, et la languette de commande 76, par coopération avec les dents de la roue à rochet 60, est amenée à faire tourner la roue à rochet 60 dans le sens horaire et donc à faire tourner la vis 63 en comprimant le ressort 86.

Lorsque l'actionneur 55, au retour, est déplacé de la gauche vers la droite, l'élasticité de l'extension 84 de l'organe élastique 72 et l'inclinaison des dents font que la languette 76 se déplace vers la droite en montant sur les dents qui sont maintenues fixes en rotation par le cliquet anti-retour 78.

Le fonctionnement du dispositif de rattrapage de jeu qui vient d'être décrit est connu et ne sera pas détaillé davantage. Si besoin est, on pourra se reporter à la demande de brevet français n°96.11297 déjà citée dont la partie de la description correspondante doit être considérée comme faisant partie de la présente demande, sachant que lors de l'opération de débrayage la course de retour ou d'armement de la languette de commande 76 est limitée par venue en butée de l'extension 84, plus précisément de la zone arrondie 184, contre les retours 71 du support 62 plus épais que l'organe 72, les retours 71 ayant pour rôle de ménager l'organe élastique 72.

Il est ainsi formé de manière unitaire une cassette 10 manipulable et transportable comportant des pièces, ici toutes métalliques, à savoir le support 62, l'organe élastique 72, le ressort hélicoïdal 86, la roue à rochet 60, la vis sans fin 63 et l'axe 67, à l'exception des paliers 3, 3', sachant que l'organe élastique 72 comporte une patte 168 d'orientation radiale accolée à la patte 68 du support 62. Le corps 73 est accolé à l'âme 64. La patte 168 présente, comme la patte 68, deux trous pour le passage de rivets de fixation 155.

Une cale d'épaisseur variable (non représentée) peut être interposée axialement entre la patte de fixation 68 et le rebord 152, 154 pour régler la position axiale de la cassette 10 dans son logement 218 et donc par rapport à l'actionneur 55 en fonction des tolérances de fabrication et des dispersions dimensionnelles des différents composants du mécanisme d'embrayage.

Bien entendu l'organe élastique 72, ici métallique, est d'épaisseur inférieure à celle du support 62 afin de rendre souple le cliquet 78 et la languette de commande 76 qui peut présenter centralement un bossage grâce auquel toutes les contraintes mécaniques sont ramenées vers le centre de la languette 76 en sorte que la languette 76 est moins fragile. Cette disposition permet d'augmenter la durée de vie de la languette 76, le bossage étant un embouti.

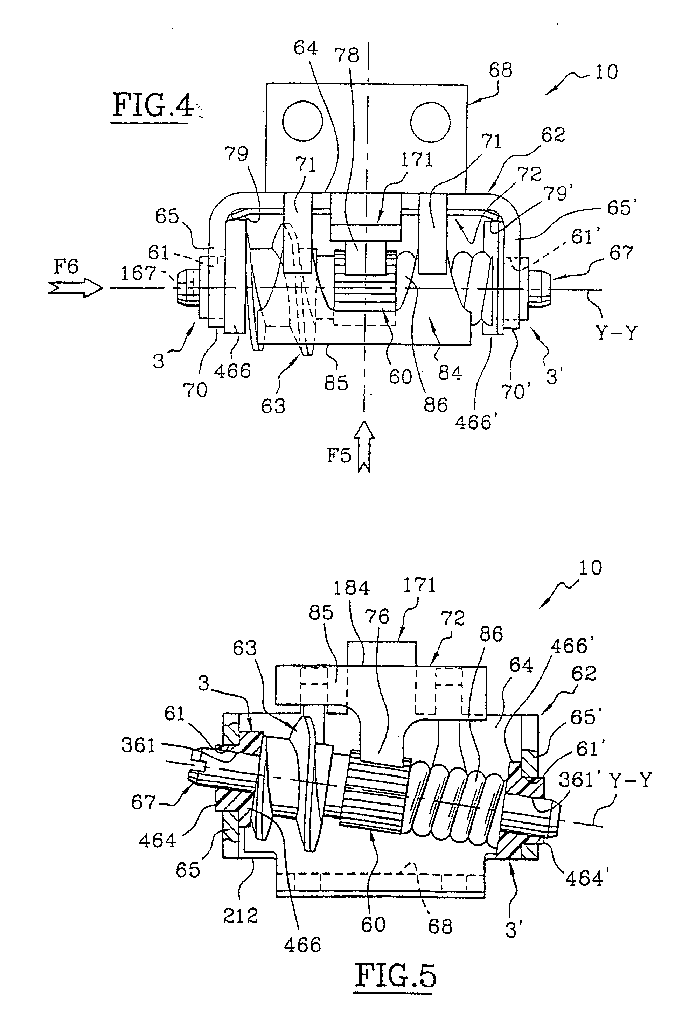

L'axe géométrique Y-Y de l'axe 67, et donc l'ensemble monobloc vis 63 - roue 60 - axe 67, peut être incliné par rapport au plan vertical transversal perpendiculaire à l'axe X-X comme on peut notamment le voir à la figure 5. L'inclinaison de l'axe est de préférence égal à celui du filet de la vis sans fin 63.

Dans le mode de réalisation du support selon l'invention illustré aux figures, l'axe 67 a ses deux extrémités opposées 69 et 69' portée chacune par un palier 3, 3' adjacents respectivement aux faces internes des ailes 65 et 65'.

Les trous 61, 61' pratiqués dans les ailes 65, 65' sont alignés axialement et ont la même taille et la même forme pour montage d'un palier épaulé 3, 3' troué centralement avec un trou 361, 361' dont chacun est traversée par une extrémité 69, 69' de l'axe 67 de l'équipage de la cassette 10.

Plus précisément, chaque trou 61, 61' constitue un logement de palier et il est conformé de manière semi-cylindrique en débouchant verticalement vers le bas dans le bord inférieur, d'orientation axiale, 70, 70' de l'aile correspondante 65, 65' du support 62.

Chaque trou-logement 61, 61' est délimité par deux bords parallèles qui appartiennent à des languettes 462, 462' de sertissage des paliers 3, 3' en position montée dans les trous 61, 61'. Ainsi le trou 61, 61' est un trou borgne avec un fond semi-circulaire. Ce trou 61 a une forme en U et est délimité par deux languettes 462, 462' que l'on rabat ensuite pour emprisonner le palier 3, 3'.

Le palier 3, 3' est donc fixé par sertissage grâce aux languettes 462, sur son aile associée 65, 65'. Ce type de réalisation s'applique également au cas où l'axe n'est pas incliné. Cela favorise un montage automatique de l'ensemble des pièces 3, 3',60,63,67,86 sur les ailes 65, 65'. Ce montage est simple et rapide.

Chaque palier 3, 3' comporte une partie externe 464, 464' de forme complémentaire de celle du trou-logement 61, 61' qui s'étend transversalement vers l'extérieur à partir d'une partie interne 466, 466' de plus grande dimension et en forme de plaque en coin qui est adjacente à la face interne en vis-à-vis de l'aile adjacente 65, 65'.

Le palier 3, 3', avantageusement en matière moulable ou en matériau fritté, à faible coefficient de frottement tel que de la matière plastique, présente donc un changement de dimension pour former un épaulement 468, 468' permettant d'immobiliser axialement le palier contre la face interne de l'aile 65,65' concernée.

Le trou central 361, 361' du palier 3, 3' est incliné en fonction des applications, tandis que les trous 61, 61' sont décalés axialement.

Ainsi, grâce aux trous centraux inclinés 361, 361' des paliers 3, 3', on incline l'axe Y-Y de l'axe 67 de la valeur recherchée pour un contact maximum entre la vis tangentielle 63 et les dents de la denture 64. Comme dans toutes les figures, le filet de la vis 63 a une trajectoire (un déplacement) parallèle à celle des dents de la denture 59, les faces dorsales des paliers sont inclinées de façon à être parallèles respectivement à la face d'extrémité de la vis 63 et à l'extrémité du ressort 86.

L'axe 67 présente, par exemple à son extrémité axiale 69, une fente 167 pour la remise à zéro, l'axe 67 étant emmanché à force comme dans les figures 1 à 17 dans la pièce 60,63.

Bien entendu l'axe 67 peut être monobloc avec la roue 60 et la vis 63. Dans ce cas (figure 7) il faut impérativement utiliser les paliers rapportés 3, 3' pour "ouvrir" les trous de passage réalisés dans les ailes 65,65'.

On notera également que l'organe élastique 72 porte directement sur les paliers 3, 3' plus précisément sur la partie de plus grande taille 466, 466' du palier 3, 3', dont la face dorsale est inclinée comme visible sur les figures.

L'organe 72 porte sur le sommet des parties 466, 466' et ce élastiquement grâce à des lames 79 et 79' d'orientation axiale et horizontale qui sont disposées de manière opposée transversalement de part et d'autre de la plaque 73.

La partie 466, 466' est donc de largeur variable, comme dans les figures 5 et 3.

L'ensemble vis 63 - roue à rochet 60 - axe 67 est monobloc et est monté avec le ressort 86 et les deux paliers entre les ailes 65,65' non vrillées.

Les deux parties 466, 466' des paliers sont en contact avec les faces internes respectivement des ailes 65,65'.

On enfile les parties de diamètre réduit 464, 464' du palier 3, 3', en matière plastique moulable ou en matériau fritté, dans les trous borgnes 61, 61' puis on rabat les languettes 462, 462' pour verrouiller axialement par sertissage les paliers 3, 3'.

Il n'est pas nécessaire que les languettes de sertissage des paliers soient préformées, l'opération de sertissage pouvant être réalisée en déformant directement la matière des ailes latérales, par exemple avec un outil formant burin. Dans tous les cas, on facilite le montage de l'ensemble.

Le sertissage peut aussi être remplacé par une opération de collage ou de soudage. En variante, les ailes 65, 65' peuvent être vrillées pour inclinaison de l'axe 67. Les palier 3, 3' ont alors une face dorsale transversale, tandis que les portions vrillées des ailes 65, 65' sont parallèles entre elles.

Bien entendu, l'invention n'est pas limitée à l'exemple de réalisation décrit. Ainsi, comme dans le document FR98/11991, la denture 59 peut ne pas être d'un seul tenant avec les moyens à rampes 54. Une pièce intermédiaire calée axialement sur le couvercle 52, par exemple à l'aide de prolongement radiaux de deux languettes 9 d'un même jeu, peut porter la denture. Cette pièce est liée en rotation avec les moyens à rampes, qui peuvent se déplacer axialement par rapport à la pièce intermédiaire, par exemple par une liaison à coopération de formes ou par des languettes de même forme que les languettes 9. La présence d'un cliquet anti-retour n'est donc pas indispensable, celui-ci étant supprimé dans ce mode de réalisation. Pour plus de précisions, on se reportera au document

FR 2 783 580, non compris dans l'état de la technique, Ici, le fond 200 du couvercle 52 présente à sa périphérie interne une partie bombée 300 avec une périphérie interne en forme d'anneau 301 d'orientation transversale. Les doigts 204 du diaphragme 53 ont une forme sinueuse à leur périphérie interne.

Ainsi, en position de stockage, c'est-à-dire avant montage du mécanisme d'embrayage à friction sur le plateau de réaction ou une pièce solidaire du plateau de réaction, les doigts 204 du diaphragme viennent en contact avec l'anneau 301 ce qui permet de ménager la cassette. L'anneau 301 est décalé axialement par rapport à l'appui primaire 205 et ce en direction opposée au plateau de pression 51. L'anneau 301 est implanté axialement entre l'appui primaire 205 et la face externe 302, tournée à l'opposé du plateau 51, du fond du couvercle 52.

Ici, les doigts 204 du diaphragme viennent en contact avec l'anneau 301 radialement au delà de leur forme sinueuse.

Le couvercle 52 peut être du type standard et servir à un mécanisme d'embrayage non doté de dispositif de rattrapage d'usure. Pour cela il suffit de couper la matière, selon les applications, entre les colonnettes 58, ou tout autre moyen de montage du diaphragme sur le couvercle et l'anneau 301.

Bien entendu, on peut protéger la cassette 10 en prévoyant une pièce de support que l'on enlève après montage du mécanisme comme décrit dans le document FR2775038 auquel on se reportera pour plus de précisions et qui ne fait pas partie de l'état de la technique.

La cassette 10 ne comporte pas forcément de moyens élastiques de rattrapage 86. Ceux-ci peuvent intervenir par exemple entre les plots 57, et les rampes 56.

On appréciera que la cassette se monte par enfilage axial dans le logement, avant sa fixation.

Bien entendu, on peut supprimer la patte 68. En effet, le logement 218 est limité par une paroi supérieure horizontale 202 d'orientation tangentielle dont la face inférieure constitue la face supérieure d'appui par l'âme 64 en sorte qu'il est possible de fixer par rivetage l'âme 64 contre la face inférieure de la paroi 202.

Ainsi qu'il ressort à l'évidence des dessins, le fond 200 du couvercle 52 est embouti axialement localement au niveau des colonnettes 58 et de l'appui primaire 205 en direction du plateau de pression 51, en sorte que l'anneau 301 est raccordé à l'appui primaire 205 par une partie bombée 300.

Bien, entendu, cela dépend des moyens de montage du diaphragme sur le fond du couvercle 52 en sorte que la partie bombée 300 peut avoir une autre forme. Dans tous les cas, on tire partie de la chute de matière d'un couvercle classique pour former une butée 301 pour protéger la cassette 301 ou tout autre dispositif de rattrapage d'usure.

## Revendications

1. Mécanisme d'embrayage à friction, du type comportant un couvercle arrière (52), un plateau de pression avant (51) lié en rotation au couvercle (52) tout en pouvant se déplacer axialement par rapport à celui-ci, des moyens d'appui (14) portés par le plateau de pression (51), des moyens embrayeurs (53) à action axiale agissant entre le couvercle (52) et les moyens d'appui (14), et un dispositif de rattrapage d'usure comprenant d'une part des moyens (54) à rampes (56) solidaires en rotation d'une denture externe (59) et placés entre le plateau de pression (51) et les moyens d'appui (14) pour constituer un plateau de pression (51, 54) d'épaisseur variable entre sa face de friction (11) et les moyens d'appui (14) et comprenant, d'autre part, une cassette (10) portée par le couvercle (52) et qui comporte une pièce (62), solidaire du couvercle (52), formant support globalement en forme de U avec une âme centrale (64) supérieure, et deux ailes latérales (65,65') parallèles et opposées dont chacune s'étend verticalement vers le bas et dont chacune comporte un trou (61, 61') pour le montage à rotation d'une extrémité d'un axe (67) d'un équipage (67, 63, 60) comportant une vis sans fin (63), coopérant avec la denture (59) des moyens à rampe, qui est portée par l'axe (67), dans lequel l'une au moins des ailes latérales (65,65') du support (62) porte un palier (3,3') troué centralement (361,361') qui reçoit une extrémité (69,69') de l'axe (67) et qui est logé dans un trou borgne (61,61') de l'aile dans lequel il est enfilé puis emprisonné.

2. Mécanisme selon la revendication précédente, dans lequel chacune des deux ailes latérales (65,65') porte un palier (3,3').

3. Mécanisme selon la revendication 1, dans lequel les trous (61,61',361,361') sont décalés axialement l'un par rapport à l'autre pour inclinaison (Y-Y) de la vis sans fin (63) et de l'axe (67).

4. Mécanisme selon la revendication 2, dans lequel les trous centraux (361,361') des paliers (3,3') sont inclinés pour inclinaison de la vis sans fin (63) et de l'axe (67).

5. Mécanisme selon la revendication 1, dans lequel le support (62) porte un organe élastique (72) doté d'une languette de commande (76) portée par un retour (85) que présente ledit organe élastique et d'un cliquet anti-recour (78), en ce que le cliquet anti-retour (78) et la languette de commande (76) sont propres à coopérer avec une roue à rochet (60) solidaire de la vis sans fin (63) et dans lequel le retour (85) de l'organe élastique présente deux tronçons de hauteur différente disposés de part et d'autre de la languette de commande (76).

6. Mécanisme selon la revendication 2, dans lequel les paliers (3,3') sont engagés dans des trous borgnes (61) réalisés dans les ailes (65,65') et verrouillés par sertissage (462, 462') dans lesdits trous.

7. Mécanisme selon la revendication 1, dans lequel les moyens (54) à rampes (56) sont d'un seul tenant avec la denture (59).

8. Mécanisme selon la revendication 1, dans lequel l'axe (67) présente une fente (167) pour la remise à zéro.

## Patentansprüche

1. Reibungskupplungsmechanismus, umfassend einen hinteren Deckel (52), eine vordere Druckplatte (51), die drehfest mit dem Deckel (52) verbunden ist, wobei sie sich im Verhältnis zu diesem axial verschieben kann. an der Druckplatte (51) angebrachte Auflagemittel (14), axial wirksame Einrückmittel (53), die zwischen dem Deckel (52) und den Auflagemitteln (14) wirken, und eine Verschleißnachstellvorrichtung, die einerseits Rampenmittel (54) mit Rampen (56) umfaßt, die drehfest mit einer Außenzahnung (59) verbunden und zwischen der Druckplatte (51) und den Auflagemitteln (14) angeordnet sind, um eine Druckplatte (51, 54) mit veränderlicher Dicke zwischen ihrer Reibfläche (11) und den Auflagemitteln (14) zu bilden, und die andererseits eine Kassette (10) umfaßt, die am Deckel (52) angebracht ist und die ein fest mit dem Deckel (52) verbundenes Teil (62) enthält, das einen insgesamt U-förmigen Träger mit einem oberen Mittelsteg (64) und zwei parallelen und gegenüberliegenden Seitenschenkeln (65, 65') bildet, die sich jeweils vertikal nach unten erstrecken und die jeweils ein Loch (61, 61') für die drehbare Lagerung eines Endes einer Achse (67) einer Baugruppe (67, 63, 60) enthalten, die eine Schnecke (63) umfaßt, die mit der Zahnung (59) der Rampenmittel zusammenwirkt, die an der Achse (67) angebracht ist, wobei wenigstens einer der Seitenschenkel (65, 65') des Trägers (62) ein mittig gelochtes (361, 361') Lager (3, 3') trägt, das ein Ende (69, 69') der Achse (67) aufnimmt und das in einem Sackloch (61, 61') des Schenkels aufgenommen ist, in das es eingesteckt und in dem es anschließend arretiert wird.

2. Mechanismus nach dem vorangehenden Anspruch, wobei jeder der zwei Seitenschenkel (65, 65') ein Lager (3, 3') trägt.

3. Mechanismus nach Anspruch 1, wobei die Löcher (61, 61', 361, 361') im Hinblick auf die Neigung (Y-Y) der Schnecke (63) und der Achse (67) im Verhältnis zueinander axial versetzt sind.

4. Mechanismus nach Anspruch 2, wobei die mittigen Löcher (361, 361') der Lager (3, 3') im Hinblick auf die Neigung der Schnecke (63) und der Achse (67) geneigt sind.

5. Mechanismus nach Anspruch 1, wobei der Trager (62) ein elastisches Organ (72) mit einer Betätigungszunge (76), die an einem Rücksprung (85) angebracht ist, den das besagte elastische Organ aufweist, und mit einer Sperrklinke (78) trägt, daß die Sperrklinke (78) und die Betätigungszunge (76) mit einem fest mit der Schnecke (63) verbundenen Sperrzahnrad (60) zusammenwirken und wobei der Rücksprung (85) des elastischen Organs zwei Teilstücke mit unterschiedlicher Höhe aufweist, die beiderseits der Betätigungszunge (76) angeordnet sind.

6. Mechanismus nach Anspruch 2, wobei die Lager (3, 3') in Sacklöchem (61) eingesetzt sind, die in den Schenkeln (65, 65') ausgebildet sind, und durch Auffalzen (462, 462') in den besagten Löchern gesichert sind.

7. Mechanismus nach Anspruch 1, wobei die Rampenmittel (54) mit Rampen (56) einstückig mit der Zahnung (59) ausgeführt sind.

8. Mechanismus nach Anspruch 1, wobei die Achse (67) einen Schlitz (167) für die Rückstellung aufweist.

## Claims

1. A friction clutch mechanism, of the type comprising a posterior cover plate (52), an anterior pressure plate (51) coupled in rotation to the cover plate (52) while being displaceable axially with respect to the latter, abutment means (14) carried by the pressure plate (51), axially acting clutch engaging means (53) working between the cover plate (52) and the abutment means (14), and a wear compensating device comprising, firstly, ramp means (54) having ramps (56) rotatable with a set of external teeth (59) and located the pressure plate (51) and the abutment means (14), whereby to constitute a pressure plate (51, 54) of variable thickness between its friction face (11) and the abutment means (14), and comprising secondly a cassette (10), which is carried by the cover plate (52) and which includes a member (62), fixed with respect to the cover plate (52) and being a generally U-shaped support member with a central spine portion (64) at the top and two parallel and opposed lateral wing portions (65, 65'), each of which extends vertically downwards, and each of which has a hole (61, 61') for mounting, rotatably therein, an end portion of a spindle (67) of a unit (67, 63, 60) which includes a worm (63) in cooperation with the set of teeth (59) of the ramp means, the worm being carried by the spindle (67), wherein at least one of the lateral wing portions (65, 65') of the support member (62) carries a bearing (3, 3') having a central hole (361, 361') which receives an end portion (69, 69') of the spindle (67) and is lodged in a blind hole (61, 61') of the wing portion into which it is inserted and then trapped therein.

2. A mechanism according to the preceding Claim, wherein each of the two lateral wing portions (65, 65') carries a bearing (3, 3').

3. A mechanism according to Claim 1, wherein the holes (61, 61', 361, 361') are offset axially with respect to each other so that the worm (63) and spindle (67) are inclined.

4. A mechanism according to Claim 2, wherein the central holes (361, 361') of the bearings (3, 3') are inclined whereby the worm (63) and spindle (67) are inclined.

5. A mechanism according to Claim 1, wherein the support member (62) carries a resilient member (72) having a control, tongue (76) carried by a flange (85) of the said resilient member, and further having a non-return pawl (78), wherein the non-return pawl (78) and the control tongue (76) are adapted to cooperate with a ratchet wheel (60) which is fixed with respect to the worm (63), and wherein the flange (85) of the resilient member comprises two portions of different heights disposed on either side of the control tongue (76).

6. A mechanism according to Claim 2, wherein the bearings (3, 3') are engaged in blind holes (61) formed in the wing portions (65, 65') and locked by seaming (462, 462') in the said holes.

7. A mechanism according to Claim 1 wherein the ramp means (54), with their ramps (56), are integral with the set of teeth (59).

8. A mechanism according to Claim 1, wherein the spindle (67) has a slot (167) for zeroing purposes.
